**Europäisches Patentamt**

**European Patent Office**

**Office européen des brevets**

(19)

(11) Numéro de publication: **0 148 658**
**B1**

(12)

# FASCICULE DE BREVET EUROPEEN

(45) Date de publication du fascicule du brevet:
**01.04.87**

(51) Int. Cl.⁴: **B 64 C 7/00,** B 64 D 29/00

(21) Numéro de dépôt: **84402383.8**

(22) Date de dépôt: **22.11.84**

(54) **Aile d'aéronef en flèche pourvue d'un système hypersustentateur et d'un mât de suspension de moteur, ainsi que mât de suspension de moteur pour une telle aile.**

(30) Priorité: **06.12.83 FR 8319480**

(43) Date de publication de la demande:
**17.07.85 Bulletin 85/29**

(45) Mention de la délivrance du brevet:
**01.04.87 Bulletin 87/14**

(84) Etats contractants désignés:
**DE GB NL**

(56) Documents cités:
**EP - A - 0 075 686**

(73) Titulaire: **AEROSPATIALE Société Nationale Industrielle, 37 boulevard de Montmorency, F-75781 Paris Cédex 16 (FR)**

(72) Inventeur: **Perin, Robert, 15 rue du Courbet Cidex 2117, F-31490 Pibrac (FR)**
Inventeur: **Jourdan, Pierre, Aussonne Cidex 3654, F-31700 Blagnac (FR)**
Inventeur: **Pauly, Bernard, 13 rue des Fleurs, F-31700 Blagnac (FR)**

(74) Mandataire: **Bonnetat, Christian et al, Cabinet PROPI Conseils 23 rue de Léningrad, F-75008 Paris (FR)**

## Description

La présente invention concerne une aile d'aéronef qui est pourvue d'un système hypersustentateur dans son bord d'attaque et sous laquelle est suspendu au moins un moteur par l'intermédiaire d'un mât. Elle concerne également un mât de suspension de moteur pour une telle aile.

On sait que, pour des raisons aérodynamiques, les ailes des avions modernes, et plus particulièrement des avions gros porteurs, sont disposées en flèche, c'est-à-dire que leur bord d'attaque est incliné vers l'arrière par rapport à l'axe longitudinal de l'avion. Par ailleurs, pour accroître leur portance aux basses vitesses, essentiellement aux moments du décollage, de l'atterrissage ou de l'attente en vol, ces avions sont pourvus, dans le bord d'attaque de leurs ailes, d'un système hypersustentateur comportant des becs susceptibles de se déplacer, orthogonalement audit bord d'attaque et dans les deux sens, entre une position repliée pour laquelle ils sont logés dans des évidements des ailes et forment une partie du bord d'attaque et la partie voisine de l'extrados desdites ailes et une position déployée d'hypersustentation pour laquelle lesdits becs font saillie en avant dudit bord d'attaque. Les becs d'un tel système hypersustentateur sont généralement disposés sur toute la longueur du bord d'attaque, du bout d'une aile jusqu'au voisinage de l'encastrement de celle-ci dans le fuselage.

Dans de tels avions, les moteurs sont montés sous les ailes par l'intermédiaire de mâts carénés reliés à l'intrados de celles-ci. Un tel mât de suspension de moteur comporte une section horizontale oblongue d'axe longitudinal approximativement parallèle à l'axe longitudinal de l'avion et il déborde généralement vers l'avant ledit bord d'attaque des ailes, son bord avant pouvant rejoindre l'aile correspondante au voisinage du bord d'attaque de celle-ci.

Avec une telle configuration de mât de suspension, il est indispensable d'interrompre le système hypersustentateur au niveau d'un mât, de sorte que chaque mât se trouve disposé entre deux becs dudit système hypersustentateur.

Lorsque le système hypersustentateur est en position repliée, il n'y a aucune difficulté à ajuster, au mieux des conditions aérodynamiques, c'est-à-dire à la valeur minimale juste nécessitée par le jeu, la largeur de la fente entre les bords latéraux des becs, disposés vers un mât, et les bords latéraux en regard desdits évitements des ailes.

En revanche, du fait que la direction longitudinale d'un mât et que la direction du mouvement des becs d'hypersustentation sont concourantes, on doit laisser subsister, en position déployée desdits becs, des vides importants entre un mât et les bords latéraux des becs, disposés en regard de celui-ci, afin de permettre le mouvement desdits becs. Bien entendu, ces vides correspondent à des discontinuités de surfaces aérodynamiques et donc à une dégradation des performances aérodynamiques de l'avion.

La présente invention a pour objet de remédier à cet inconvénient et d'obtenir un gain de portance, non seulement en position déployée des becs d'hypersustentation, mais encore en position repliée de ceux-ci.

A cette fin, selon l'invention, l'aile d'aéronef dont le bord d'attaque est incliné par rapport à l'axe longitudinal dudit aéronef et qui, d'une part, est pourvue, dans ledit bord d'attaque, d'un système hypersustentateur comprenant au moins un bec susceptible de se déplacer, orthogonalement audit bord d'attaque et dans les deux sens, entre une position repliée pour laquelle il est logé dans un évidement de l'aile et forme une partie du bord d'attaque et la partie voisine de l'extrados de celle-ci et une position déployée d'hypersustentation pour laquelle ledit bec fait saillie en avant dudit bord l'attaque, et, d'autre part, est solidaire, du côté de son intrados, d'au moins un mât caréné pour la suspension d'un moteur, ledit mât présentant une section horizontale oblongue d'axe longitudinal approximativement parallèle audit axe longitudinal dudit aéronef, débordant vers l'avant ledit bord d'attaque de l'aile et comportant un bord avant rejoignant ladite aile au voisinage du bord d'attaque de celle-ci, est remarquable en ce que la paroi de la partie supérieure dudit mât de suspension, disposée en regard dudit bec, est dirigée de façon au moins approximativement audit bord d'attaque de l'aile et est conformée pour que, en position déployée ainsi qu'en toute position intermédiaire entre lesdites positions déployée et repliée, la fente existant entre ledit bec et ladite paroi soit juste suffisante pour permettre le mouvement dudit bec.

Ainsi, au jeu de fonctionnement près, l'interface entre le mât et le bec est pratiquement sans fente, de sorte que la continuité des surfaces aérodynamiques est assurée sans faille dans toutes les configurations dudit bec. De préférence, la largeur de la fente entre le mât et le bec voisin est voisine de 25 mm.

Lorsque, de façon usuelle, le système hypersustentateur d'une aile comporte deux becs disposés de part et d'autre dudit mât de suspension, chaque paroi de la partie supérieure dudit mât, disposée en regard d'un desdits becs, est dirigée de façon au moins approximative orthogonalement audit bord d'attaque de l'aile et est conformée pour que, en position déployée ainsi qu'en toute position intermédiaire entre lesdites positions déployée et repliée, les fentes existant entre lesdits becs et ledit mât soient juste suffisantes pour permettre le mouvement desdits becs.

On obtient donc ainsi la continuité aérodynamique de part et d'autre du mât.

Dans ce cas, la partie supérieure du mât forme donc un coude dirigé vers le fuselage de l'aéronef. Les essais en soufflerie ont montré que cette partie supérieure coudée du mât permettait d'une part un meilleur contournement, sans décollement, les lignes fluides franchissant le bord avant (ou bord d'attaque) du mât et, d'autre part, une meilleure continuité avec tout carénage placé à l'intrados de l'aile, le long de la face intérieure ou extérieure du mât. Par suite, même en vol de croisière, les performances aérodynamiques de l'aéronef sont améliorées par l'invention.

Aussi, la présente invention concerne-t-elle également un mât caréné pour la suspension d'un moteur sous une aile d'aéronef dont le bord d'attaque est incliné par rapport à l'axe longitudinal dudit aéronef, ledit mât présentant une section oblongue et étant destiné à être rendu solidaire de ladite aile, du côté de l'intrados de celle-ci, de façon que l'axe longitudinal de sa section oblongue soit approximativement parallèle à l'axe longitudinal dudit aéronef, qu'il déborde vers l'avant le bord d'attaque de l'aile et que son bord avant rejoigne ladite aile au voisinage du bord d'attaque de celle-ci, ladite aile étant pourvue, dans ledit bord d'attaque, d'un système hypersustentateur comprenant au moins un bec susceptible de se déplacer, orthogonalement audit bord d'attaque et dans les deux sens, entre une position repliée pour laquelle il est logé dans un évidement de l'aide et forme une partie du bord d'attaque et la partie voisine de l'extrados de celle-ci et une position déployée d'hypersustentation pour laquelle ledit bec fait saillie en avant dudit bord d'attaque. Selon l'invention, ce mât est remarquable en ce que la paroi de sa partie supérieure destinée à se trouver en regard dudit bec, est conformée de façon à ce que, après solidarisation dudit mât sur ladite aile, ladite paroi soit dirigée de façon au moins approximative orthogonalement audit bord d'attaque de l'aile et que, en position déployée ainsi qu'en toute position intermédiaire entre lesdites positions déployée et repliée, la fente existant entre ledit bec et ladite paroi soit juste suffisante pour permettre le mouvement dudit bec.

De préference, afin de faciliter la fabrication d'un mât selon l'invention, la forme externe de celui-ci peut être réalisée en fibres résistantes (verre, carbone, bore, etc.) enrobées de résine synthétique polymérisable. Il est donc possible d'utiliser les méthodes de conformation des stratifiés pour réaliser ledit mât.

De plus, on remarquera que la partie coudée du mât permet d'améliorer, grâce à sa forme, le passage de conduites et câbles divers entre la partie avant dudit mât et l'intérieur du bord d'attaque de l'aile, puisque la coudure de ces conduites et câbles est guidée et plus progressive que lorsque le mât est dans sa totalité parallèle à l'axe de l'aéronef.

Les figures du dessin annexé feront bien comprendre comment l'invention peut être réalisée. Sur ces figures, des références identiques désignent des éléments semblables.

La figure 1 est une vue de dessus schématique partielle d'un aéronef de type connu, montrant une partie d'aile pourvue d'un moteur.

La figure 2 est une vue de dessus schématique partielle, correspondant à la figure 1, d'un aéronef conforme à l'invention.

La figure 3 est une vue en bout de la portion d'aile et de son moteur, montrée par la figure 1 ou par la figure 2.

La figure 4 est une vue en perspective d'une portion d'aile conforme à l'invention, les becs du système hypersustentateur étant en position repliée.

Les figures 5, 6 et 7 sont des vues en perspective, dans l'axe du moteur, sous un angle différent de celui de la figure 4, de la portion d'aile conforme à l'invention, les becs du système hypersustentateur étant respectivement en position repliée, en position intermédiaire et en position déployée.

La figure 8 est un diagramme comparatif illustrant la variation du carré $P^2$ de la portance P en fonction de la trainée T, respectivement pour une aile pourvue d'un mât droit connu et pour une aile selon l'invention pourvue d'un mât courbe, les becs étant en position déployée.

La figure 9 est un diagramme comparatif illustrant la variation de la portance P, en fonction de la trainée T, respectivement pour une aile pourvue d'un mât droit connu et pour une aile selon l'invention pourvue d'un mât courbe, les becs étant en position repliée.

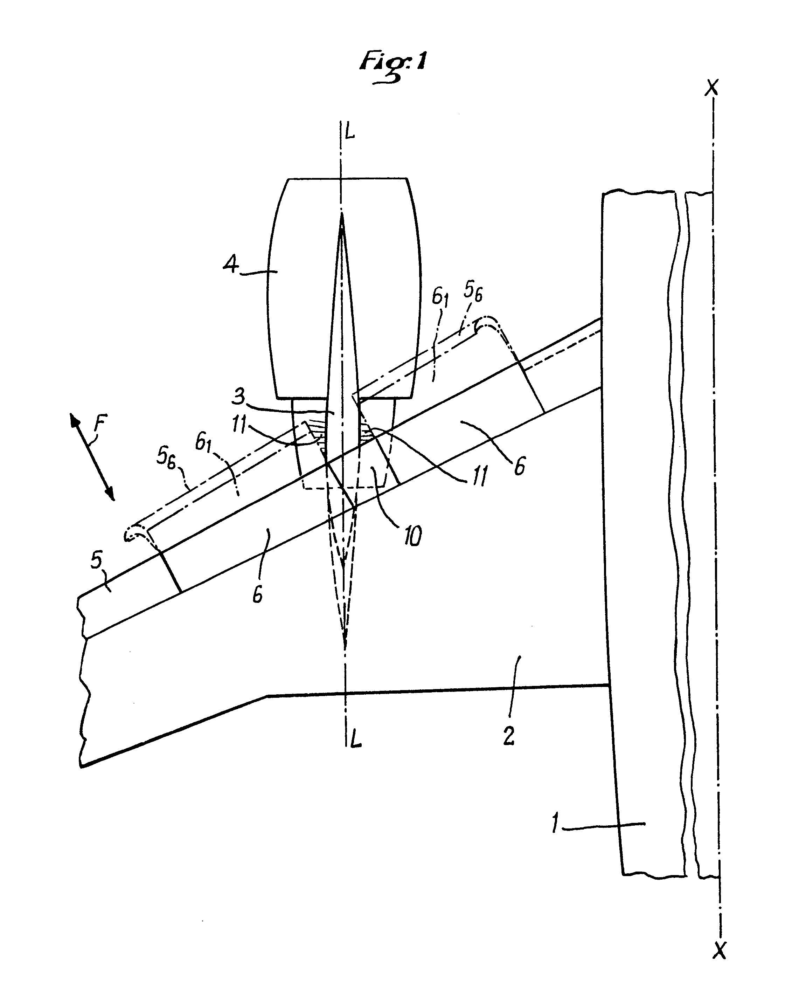

Sur la figure 1, on a représenté en vue de dessus une partie d'avion comportant un fuselage 1 d'axe longitudinal X-X et une aile 2 sous laquelle est fixé, par l'intermédiaire d'un mât 3, un moteur 4, dont l'axe L-L est parallèle audit axe X-X.

Le bord d'attaque 5 de l'aile 2 est incliné par rapport aux axes X-X et L-L, et non pas orthogonal à ceux-ci.

Par ailleurs, le mât 3 est caréné et il présente une section oblongue dont le grand axe est parallèle à l'axe L-L du moteur 4.

Dans la région de son bord d'attaque 5, l'aile 2 comporte de chaque côté du mât 3 un volet ou bec hypersustentateur 6 disposé, en position repliée, dans un logement ménagé dans une partie du bord d'attaque et de l'extrados de l'aile 2. En position repliée (représentée en trait plein), les volets hypersustentateurs 6 forment la partie du bord d'attaque et de l'extrados de l'aile 2 correspondant à ces logements. La position repliée des volets hypersustentateurs 6 dans leur logement correspond au vol normal à grande vitesse.

En vol à faible vitesse, par exemple lors de l'atterrissage ou du décollage de l'avion, les volets 6 prennent une position déployée $6_1$ (voir la position en pointillés sur la figure 1), pour laquelle les volets 6 font saillie vers l'avant du bord d'attaque 5 et ménagent une fente s'écoulement d'air entre leur intrados et l'extrados de l'aile 2. Le mouvement des volets 6 pour passer de leur position repliée à leur position déployée et vice-versa s'effectue dans une direction orthogonale au bord d'attaque 5 (voir la double flèche F), c'est-à-dire dans une direction non parallèle aux axes X-X et L-L.

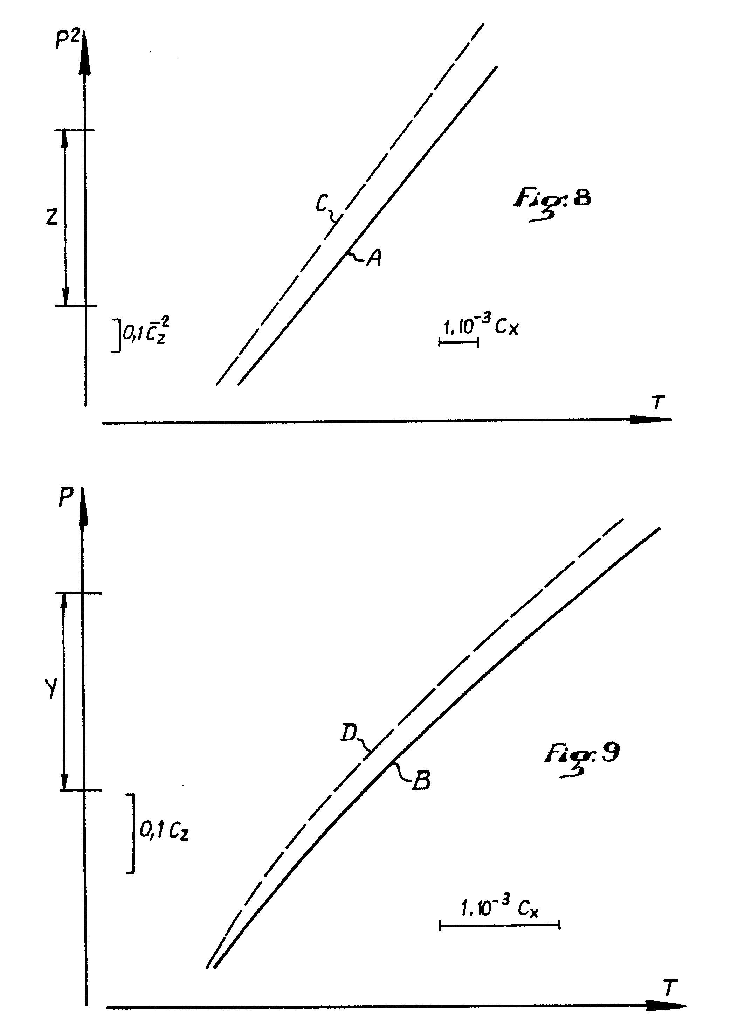

L'aile 2 est raccordée au mât 3, de part et d'autre de la base de celui-ci, selon une ligne 8 qui remonte de son intrados jusqu'au bord d'attaque 9 dudit mât 3 qui enveloppe (en 10) le bord d'attaque 5 de l'aile 2 (figure 3).

Ainsi, en position repliée des volets 6, le bord d'attaque 5 de l'aile ne présente pas de discontinuité à l'extrados de part et d'autre du mât 3, et l'interface entre les becs 6 et le mât 3 est assurée sans fente.

En revanche, en position déployée $6_1$ des becs hypersustentateurs 6, il existe des discontinuités 11 (hachurées sur la figure 1) entre ceux-ci et le mât 3, de part et d'autre de ce dernier, du fait du non parallélisme entre l'axe longitudinal de la section du mât 3 et la direction F du movement desdits becs 6.

Comme mentionné ci-dessus, l'objet de la présente invention est de remédier aux effets néfastes sur les performances de l'avion qui résultent des discontinuités 11 en position déployée des becs 6.

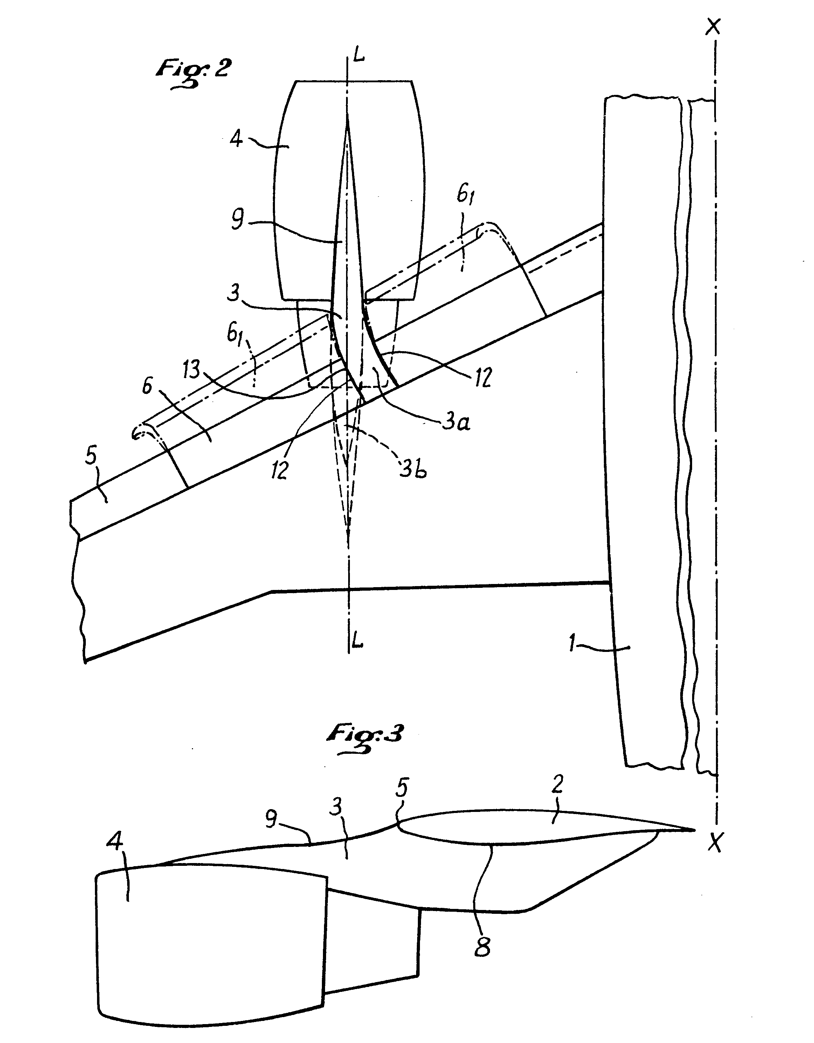

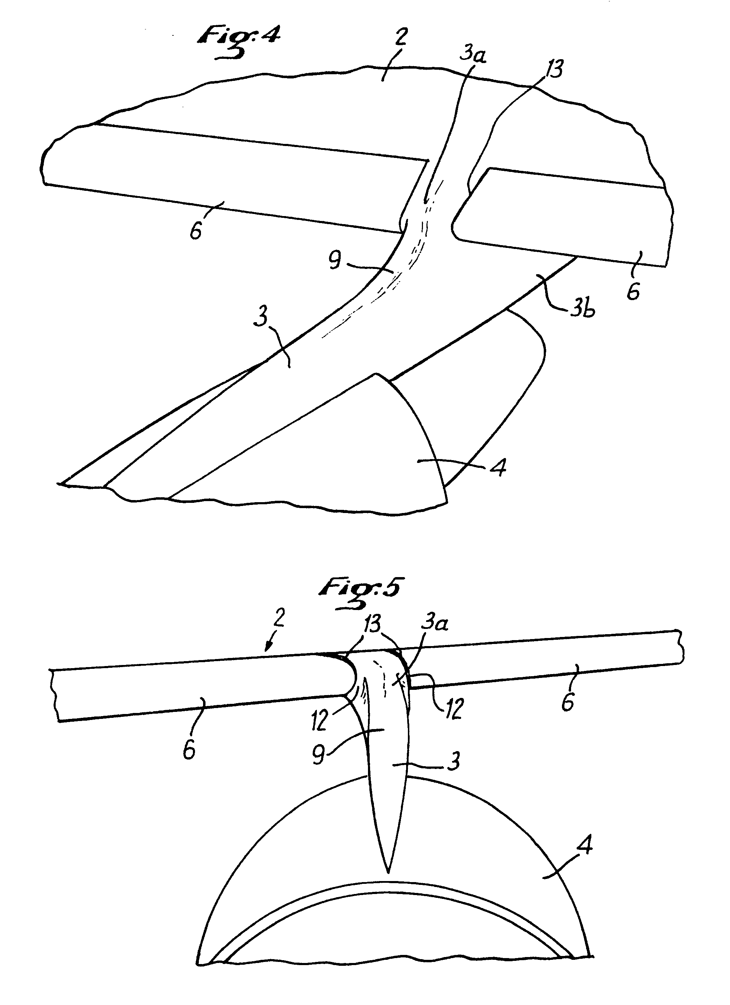

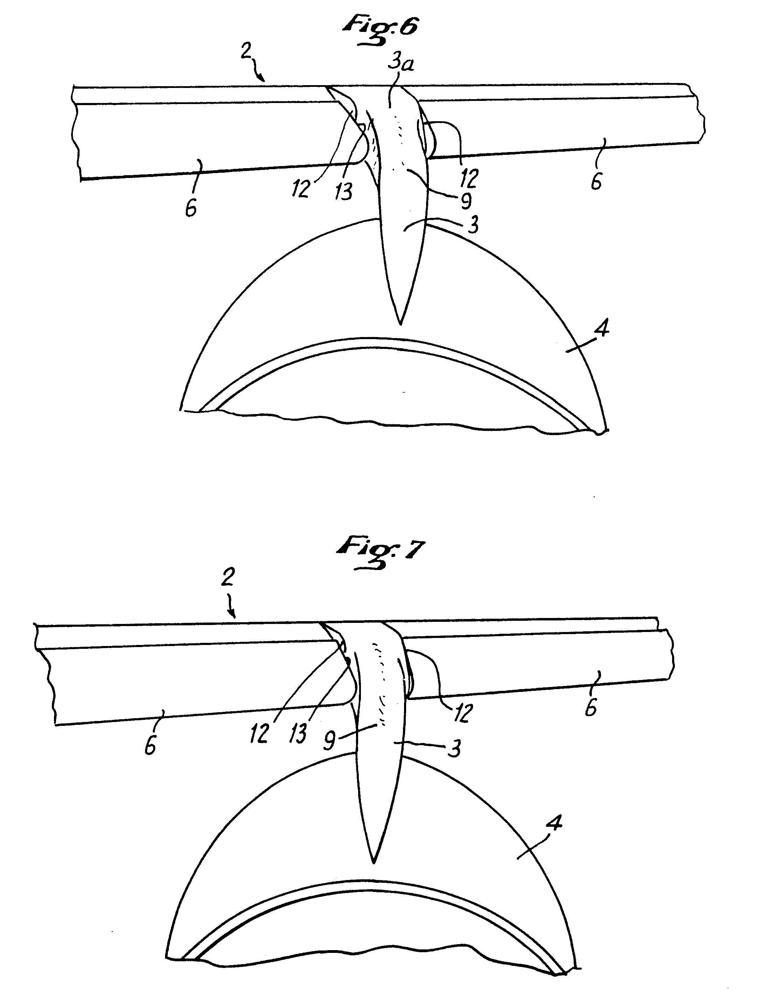

Pour cela, comme illustré sur les figures 2 et 4 à 7, les parois 12 de la partie supérieure 3a du mât 3, en regard des becs 6, sont dirigées de façon au moins approximative orthogonalement au bord d'attaque 5 de l'aile 2 et sont conformées pour que, en position déployée (voir sur la figure 2 la position en pointillés et la figure 7), ainsi qu'en toute position intermédiaire (voir la figure 6) entre la position repliée (voir sur la figure 2 la position en traits pleins et les figures 4 et 5) et la position déployée, les fentes 13 existant entre lesdits becs 6 et les parois 12 du mât 3 soient juste suffisantes pour permettre le mouvement desdits becs 6.

Ainsi, comme on peut le voir très clairement sur la figure 2, la partie supérieure 3a du mât 3 est coudée vers l'axe X-X, par rapport au reste 3b dudit mât se trouvant du côté de l'intrados de l'aile 2.

Les formes externes du mât 3 peuvent être réalisées en stratifié de fibres résistantes enrobées de résine synthétique.

Grâce à la coubure (ou cambrure) de la partie supérieure 3a du mât 3 dans la zone de débattement des becs 6, la continuité du bord d'attaque 5 est assurée, que les volets 6 soient dans leur position repliée ou dans leur position déployée ou dans toute autre position intermédiaire entre celles-ci.

Par ailleurs, comme il est illustré schématiquement sur les figures, il est avantageux que le mât 3 enveloppe une partie du bord d'attaque 5 de l'aile 2 par sa partie 3a.

On voit ainsi que, grâce à l'invention, il est possible d'assurer, à faible vitesse de l'avion, l'interface sans fente entre les becs 6 et le mât 3.

Afin de pouvoir juger des améliorations apportées par l'invention, on a effectué des essais comparatifs en soufflerie sur un tronçon d'aile 2 équipé d'un moteur 4: dans le premier cas, ledit tronçon d'aile 2 supportait le moteur 4 au moyen d'un mât 3 connu, comme cela est montré sur la figure 1; dans le second cas, le même tronçon d'aile 2 supportait le même moteur 4 au moyen du mât 3 selon l'invention, à partie supérieure 3a coudée, comme cela est montré sur les figures 2 et 4 à 7. Ces essais comparatifs ont été effectués avec les becs 6 en position déployée (figure 8), c'est-à-dire en configuration de décollage, et en position repliée (figure 9), c'est-à-dire en configuration de croisière. Sur ces figures 8 et 9, les résultats concernant le mât 3 connu sont représentés par les courbes A et B (courbes en trait plein desdites figures), tandis que ceux correspondant au mât selon l'invention sont représentés par les courbes C et D (en tirets). Sur la figure 8, représentant le carré $P^2$ de la portance P en fonction de la trainée T, on a indiqué par Z la zone correspondant au décollage. De même, sur la figure 9, qui représente la portance P en fonction de la trainée T, on a indiqué par Y la zone correspondant au vol de croisière.

On voit ainsi que les performances aérodynamiques d'un avion équipé du mât de suspension de moteur selon l'invention sont améliorées, non seulement en position déployée des becs hypersustentateurs, mais encore en position repliée de ceux-ci.

### Revendications

1. Aile (2) d'aéronef dont le bord d'attaque (5) est incliné par rapport à l'axe longitudinal (X-X) dudit aéronef et qui, d'une part, est pourvue, dans ledit bord d'attaque (5), d'un système hypersustentateur comprenant au moins un bec (6) susceptible de se déplacer, orthogonalement audit bord d'attaque et dans les deux sens, entre une position repliée pour laquelle il est logé dans un évidement de l'aile (2) et forme une partie du bord d'attaque et la partie voisine de l'extrados de celle-ci et une position déployée d'hypersustentation pour laquelle ledit bec (6) fait saillie en avant dudit bord d'attaque, et, d'autre part, est solidaire, du côté de son intrados, d'au moins un mât caréné (3) pour la suspension d'un moteur (4), ledit mât (3) présentant une section horizontale oblongue d'axe longitudinal (L-L) approximativement parallèle audit axe longitudinal dudit aéronef, débordant vers l'avant ledit bord d'attaque de l'aile et comportant un bord avant (9) rejoignant ladite aile au voisinage du bord d'attaque de celle-ci, caractérisée en ce que la paroi (12) de la partie supérieure (3a) dudit mât de suspension (3), disposée en regard dudit bec (6), est dirigée de façon au moins approximative orthogonalement audit bord d'attaque (5) de l'aile (2) et est conformée pour que, en position déployée ($6_1$) ainsi qu'en toute position intermédiaire entre lesdites positions déployée et repliée, la fente (13) existant entre ledit bec (6) et ladite paroi (12) soit juste suffisante pour permettre le mouvement dudit bec (6).

2. Aile d'aéronef selon la revendication 1, caractérisée en ce que la largeur de ladite fente (13) entre ledit bec (6) et ladite paroi (12) du mât (3) est voisine de 25 mm.

3. Aile d'aéronef selon l'une quelconque des revendications 1 ou 2, dans laquelle le système hypersustentateur comporte deux becs (6) disposés de part et d'autre dudit mât de suspension (3), caractérisée en ce que chaque paroi (12) de la partie supérieure (3a) dudit mât (3), disposée en regard d'un desdits becs (6), est dirigée de façon au moins approximative orthogonalement audit bord d'attaque de l'aile et est conformée, pour que en position déployée, ainsi qu'en toute position intermédiaire entre lesdites positions déployée et repliée, les fentes (13) existant entre lesdits becs et lesdits parois soient juste suffisantes pour permettre le mouvement desdits becs.

4. Mât caréné (3) pour la suspension d'un moteur (4) sous une aile (2) d'aéronef dont le bord d'attaque (5) est incliné par rapport à l'axe longitudinal (X-X) dudit aéronef, ledit mât (3) présentant une section oblongue et étant destiné à être rendu solidaire le ladite aile (2), du côté de l'intrados de celle-ci, de façon que l'axe longitudinal (L-L) de sa section oblongue soit approximativement parallèle à l'axe longitudinal dudit aéronef, qu'il déborde vers l'avant le bord d'attaque (5) de l'aile (2) et que son bord avant (9) rejoigne ladite aile au voisinage du bord d'attaque (5) de celle-ci, ladite aile étant pourvue, dans ledit bord d'attaque, d'un système hypersustentateur comprenant au moins un bec (6) susceptible de se déplacer, orthogonalement audit bord d'attaque et dans les deux sens, entre une position repliée pour laquelle il est logé dans un évidement de l'aile et forme une partie du bord d'attaque et la partie voisine de l'extrados de celle-ci et une position déployée d'hypersustentation pour laquelle ledit bec fait saillie en avant dudit bord d'attaque, caractérisé en ce que la paroi (12) de la partie supérieure dudit mât de suspension, destinée à se trouver en regard dudit bec (6), est conformée de façon à ce que, après solidarisation dudit mât (3) sur ladite aile (2), ladite paroi (12) soit dirigée de façon au moins approximative orthogonalement audit bord d'attaque (5) de l'aile et que, en position déployée ainsi qu'en toute position intermédiaire entre lesdites positions déployée et repliée, la fente (13) existant entre ledit bec et ladite paroi soit juste suffisante pour permettre le mouvement dudit bec.

5. Mât selon la revendication 4, destiné à être disposé entre deux becs (6) du système hypersustentateur, caractérisé en ce que chaque paroi (12) de la partie supérieure (3a) dudit mât, destinée à se trouver en regard d'un desdits becs (6), est conformée de façon à ce que, après solidarisation dudit mât sur ladite aile, elle soit dirigée de façon au moins approximative orthogonalement au bord d'attaque (5) et que, en position déployée ($6_1$) ainsi qu'en toute position intermédiaire entre lesdites positions déployée et repliée, les fentes (13) existant entre lesdits becs (6) et lesdites parois (12) soient juste suffisantes pour permettre le mouvement desdits becs.

6. Mât selon la revendication 5, caractérisé en ce que sa forme externe peut être réalisée en fibres résistantes enrobées de résine synthétique.

## Patentansprüche

1. Flugzeugflügel (2), dessen Vorderkante (5) gegenüber der Längsachse (X-X) des Flugzeugs geneigt ist und der einerseits an dieser Vorderkante (5) ein Hyperauftriebsystem aufweist, das zumindest ein Flügelende (6) besitzt, das orthogonal zur Vorderkante und in beide Richtungen zwischen einer eingezogenen Stellung, bei der es in einer Ausnehmung des Flügels (2) ruht und einen Teil der Vorderkante und den zu ihrer Ober- oder Saugseite benachbarten Teil bildet, und einer ausgefahrenen Hyperauftrieb-Stellung verschiebbar ist, bei der das Flügelende (6) vor der Vorderkante herausragt, und der andererseits auf der Flügelunterseite mit zumindest einem stromlinienförmigen Kiel (3) für die Aufhängung eines Motors (4) verbunden ist, wobei der Kiel (3) einen horizontal länglichen Längsachsen(L-L)querschnitt annähernd parallel zur Längsachse des Flugzeugs aufweist, nach vorne über die Flügelvorderkante hinausgeht und einen vorderen Rand (9) besitzt, der den Flügel in der Nähe seiner Vorderkante wieder zusammenfügt, dadurch gekennzeichnet, dass die Wand (12) des oberen Teils (3a) des Aufhängekiels (3), der dem Flügelende (6) gegenüber angeordnet ist, zumindest annähernd orthogonal zur Vorderkante (5) des Flügels (2) derart gerichtet und so ausgebildet ist, dass in der ausgefahrenen Stellung ($6_1$) sowie in jeder zwischen ausgefahrener und eingezogener Stellung bestehenden Zwischenstellung der zwischen dem Flügelende (6) und der Wand (12) bestehende Spalt (13) gerade ausreichend gross ist, die Bewegung des Flügelendes (6) zuzulassen.

2. Flugzeugflügel nach Anspruch 1, dadurch gekennzeichnet, dass die Breite des Spalts (13) zwischen dem Flügelende (6) und der Wand (12) des Kiels (3) etwa annähernd 25 mm beträgt.

3. Flugzeugflügel nach einem der Ansprüche 1 oder 2 mit einem Hyperauftriebsystem bestehend aus zwei beiderseits vom Aufhängekiel (3) angeordneten Flügelenden (6), dadurch gekennzeichnet, dass jede Wand (12) des oberen Teils (3a) vom Kiel (3), das den Flügelenden (6) gegenüber angeordnet ist, zumindest annähernd orthogonal zur Vorderkante des Flügels derart gerichtet und so ausgebildet ist, dass in jeder Zwischenstellung zwischen der ausgefahrenen und der eingezogenen Stellung die zwischen den Flügelenden und den Wänden bestehende Spalte (13) gerade ausreichend gross sind, die Bewegung der Flügelenden zuzulassen.

4. Stromlinienförmiger Kiel (3) zum Aufhängen eines Motors (4) unter einem Flugzeugflügel (2), dessen Vorderkante (5) gegenüber der Längsachse (X-X) des Flugzeugs geneigt ist, wobei der Kiel (3) einen länglichen Querschnitt besitzt und am Flügel (2) auf dessen Unterseite derart zu befestigen ist, dass die Längsachse (L-L) seines Längsquerschnitts annähernd parallel zur Längsachse des Flugzeugs liegt, über das es zur Vorderkante (5) des Flügels (2) hinausragt und dass sein vorderer Rand (9) in der Nähe seiner Vorderkante (5) den Flügel wieder zusammenfügt und wobei der Flügel in der Vorderkante mit einem Hyperauftriebsystem versehen ist, das zumindest ein Flügelende (6) besitzt, das orthogonal zur Vorderkante und in beide Richtungen zwischen einer eingezogenen Stellung, bei der es in einer Ausnehmung des Flügels ruht und einen Teil der Vorderkante und den zu ihrer Ober- oder Saugseite benachbarten Teil bildet, und einer ausgefahrenen Hyperauftriebstellung verschiebbar ist, bei der das Flügelende von der Vorderkante herausragt, dadurch gekennzeichnet, dass die Wand (12) des oberen Teils des Aufhängkiels der dem Flügelende (6) gegenüber angeordnet ist, derart ausgebildet ist, dass nach Befestigung des Kiels (3) am Flügel (2) die Wand (12) zumindest annähernd orthogonal zur Vorderkante (5) des Flügels gerichtet ist oder weist und dass in der ausgefahrenen Stellung sowie in jeder Zwischenstellung zwischen der ausgefahrenen und der eingezogenen Stellung der zwischen dem Flügelende und der Wand bestehende Spalt (13) gerade ausreichend gross ist, die Bewegung des Flügelendes zuzulassen.

5. Kiel nach Anspruch 4 zum Einsetzen zwischen zwei Flügelenden (6) des Hyperauftriebsystems, dadurch gekennzeichnet, dass jede Wand (12) des oberen Teils (3a) des Kiels, der einem der Flügelenden (6) gegenüber zu liegen kommen soll, derart ausgebildet ist, dass sie nach der Befestigung des Kiels auf dem Flügel zumindest annähernd orthogonal zur Vorderkante (5) gerichtet ist und dass in der ausgefahrenen Stellung ($6_1$) sowie in jeder Zwischenstellung zwischen der ausgefahrenen und der eingezogenen Stellung die zwischen den Flügelenden (6) und den Wänden (12) bestehenden Spalte (13) gerade ausreichend gross sind, die Bewegung der Flügelenden zuzulassen.

6. Kiel nach Anspruch 5, dadurch gekennzeichnet, dass seine äussere Form aus widerstandsfähigen Fasern gebildet sein kann, die mit einem synthetischen Harz umhüllt sind.

## Claims

1. Aircraft wing (2) of which the leading edge (5) is inclined with respect to the longitudinal axis (X-X) of said aircraft, and which, on the one hand, is provided, in said leading edge (5), with a high-lift system comprising at least a flap (6) which is displaceable orthogonally with respect to said leading edge as well as in two directions between a retracted position in which it is housed inside a recess of the wing (2) and forms part of the leading edge and the part adjacent the wing upper surface, and a high-lift out-spread position in which said flap (6) projects forward from said leading edge, and on the other hand, forms part on its lower wing surface, of at least a pylon (3) for suspending an engine (4), said pylon (3) having an oblong cross-section of longitudinal axis (L-L) approximately parallel to the aircraft longitudinal axis, which projects forward from the leading edge of the wing and comprises a front edge (9) joining up with said wing in the vicinity of the leading edge thereof, characterized in that the wall (12) of the upper part (3a) of said suspension pylon (3), which is in facing relation with said flap (6), is directed at least approximately orthogonally to said wing leading edge (5) and is so shaped that, in out-spread position ($6_1$) as well as in any intermediate position between said out-spread and retracted positions, the gap (13) existing between said flap (6) and said wall (12) is sufficient to allow the movement of said flap (6).

2. Aircraft wing according to claim 1, characterized in that the width of said gap (13) between said flap (6) and said wall (12) of the pylon (3) is around 25 mm.

3. Aircraft wing according to any one of claims 1 or 2, in which the high-lift system comprises two flaps (6) situated on either side of said pylon (3), characterized in that each wall (12) of the upper part (3a) of said pylon (3), which is in facing relation with one of said flaps (6), is directed at least approximately orthogonally to said wing leading edge and is so shaped that, in out-spread position, as well as in any intermediate position between the out-spread position and the retracted position the gaps (13) between said flaps and said walls are just enough to allow the movement of said flaps.

4. Aerodynamic pylon (3) for suspending an engine (4) below the wing (2) of an aircraft, the leading edge (5) of which wing is inclined with respect to the aircraft longitudinal axis (X-X), said pylon (3) having an oblong cross-section and being designed to be connected to said wing (2) on the lower surface thereof, so that the longitudinal axis (L-L) of its oblong cross-section is approximately parallel to the aircraft longitudinal axis, and that said axis projects forward from the wing leading edge (5) and that its front edge (9) joins up with said wing in the vicinity of the leading edge (5) thereof, said wing being equipped, in said leading edge, with a high-lift system comprising at least a flap (6) adapted to move, orthogonally to said leading edge and in two directions, between a retracted position in which it is housed in a recess of the wing and forms part of the leading edge and the adjacent part of the upper surface and a high-lift out-spread position in which said flap projects forward said leading edge, characterized in that the wall (12) of the upper part of said suspension pylon which is designed to be placed in facing relation with said flap (6), is so shaped that, after connection of the pylon (3) with the wing (2), said wall (12) is directed at least approximately orthogonally to said wing leading edge (5), and that, in out-spread position as well as in any intermediate position between said out-spread and retracted positions, the gap (13) existing between said flap and said wall is just enough to allow the movement of said flap.

5. Pylon according to claim 4, adapted to be placed between two flaps (6) of the high-lift system, characterized in that each wall (12) of the upper part (3a) of said pylon, which is designed to be placed opposite one of said flaps (6), is so shaped that, after connection of the pylon with said wing, said wall is directed at least approximately orthogonally to the leading edge (5), and that in out-spread position ($6_1$) as well as in any intermediate position between said out-spread and retracted positions, the gaps (13) existing between said flaps (6) and said walls (12) are just enough to allow the movement of said flaps.

6. Pylon according to claim 5, characterized in that its external shape may be produced in strong fibers coated with synthetic resin.

Fig.1

*Fig. 2*

*Fig. 3*

9

Fig. 4

2   3a   13

6   9   3   3b   6

4

Fig. 5

2   13   3a

6   12   12   6

9   3

4

Fig. 6

Fig. 7

$P^2$

Z

$]0,1\bar{c}_z^2$

$1,10^{-3}c_x$

C

A

*Fig. 8*

T

P

Y

$]0,1c_z$

D

B

*Fig. 9*

$1,10^{-3}c_x$

T